# EUROPEAN PATENT SPECIFICATION

(11) **EP 3 775 013 B1**
(45) Date of publication and mention of the grant of the patent: **15.06.2022**
(21) Application number: 19716418.9
(22) Date of filing: 11.04.2019
(51) Int. Cl.: C08K 3/22, C08K 5/3492, C08K 7/14, C08K 7/20, C08K 7/28

(54) **FLAME-RETARDANT THERMOPLASTIC MOLDING COMPOSITION**
FLAMMHEMMENDE THERMOPLASTISCHE FORMMASSE
COMPOSITION MOULABLE THERMOPLASTIQUE IGNIFUGE

(30) Priority: 13.04.2018 EP 18167206
(43) Date of publication of application: 17.02.2021
(73) Proprietor: BASF SE, 67056 Ludwigshafen am Rhein (DE)
(72) Inventor: ROTH, Michael, 67056 Ludwigshafen (DE); USKE, Klaus, 67056 Ludwigshafen (DE); HEUSSLER, Michaela, 67056 Ludwigshafen (DE); MINGES, Christoph, 67056 Ludwigshafen (DE)
(86) International application number: PCT/EP2019/059195
(87) International publication number: WO 2019/197511

(56) References cited:
- EP-A1- 2 924 068
- WO-A1-2012/080403

## Description

The invention relates to flame-retardant polymeric molding compositions based on thermoplastic polyamides with high glow-wire resistance, to a process for production of these and to use of these, and also to fibers, films or moldings thereof.

The last few years have seen an accelerated increase in the importance of flame-retardant polyamides. Products of particular interest here are those with pale intrinsic color for the electrical sector. However, although red phosphorus and halogen compounds in combination with synergists are known flame-retardancy systems, they are unsuitable for this application sector. Halogen compounds reduce the level of electrical properties such as tracking resistance and dielectric strength. The intrinsic color of red phosphorus prevents its use for pale colors. DE 1694254 recommends use of melamine for the production of pale-color, unreinforced, and flame-retardant polyamides. In the case of glassfiber-reinforced polyamides, melamine and melamine salts such as melamine cyanurate are less effective, and the glow-wire resistance of these products is very low - specifically when wall thicknesses are low.

In contrast, unreinforced molding compositions, which generally have higher glow-wire resistance, have the disadvantage of inadequate mechanical properties such as stiffness and strength. Although addition of glass fibers to polyamide mixtures with melamine cyanurate improves mechanical properties, flame retardancy properties are adversely affected because flame retardancy is drastically impaired by what is known as the wicking effect of glass fibers. Accordingly, EP-A-241 702 discloses that the flame retardancy performance of PA mixtures made of glass fibers with melamine cyanurate can be improved by using, in the mixture, short glass fibers with fiber length that is not described in any more detail.

The effectiveness of flame retardancy additive mixtures is in essence described via UL94-V fire tests. However, for certain applications of flame-retardant polymers in systems within buildings, and also in low-voltage switching equipment, the glow-wire test in accordance with IEC 60695-2-12 is an especially important criterion, while high flame retardancy is also desirable.

When glass fibers are used in the patents cited, they can be used in the form of conventional continuous-filament fibers (rovings) or chopped fibers. Shear in the extruder when fiber bundles of length from 4 to 6 mm are used, gives a glassfiber length distribution in the product that is about 250 to 300 µm in the case of conventional processing (based on a product with 25% glassfiber content). A factor requiring consideration here is that average fiber length generally decreases as fiber content increases, because the extent of fiber interactions in the incorporation zone increases and the extent of fiber breakage therefore increases (F. Raumsteiner, R. Theysohn, Comp. Sci. Techn. 23 (1985) 231).

EP-B-0 848 729 relates to flame-retardant thermoplastic molding compositions composed of thermoplastic polyamide, from 1 to 40% by weight of melamine cyanurate, and also from 1 to 50% by weight of a glass fiber with an arithmetic mean fiber length (d₅₀ value) of from 70 to 200 µm and a d₁₀ value ≤ 60 µm and a d₉₀ value of ≤ 350 µm, pretreated with a silane compound. Other additional substances and processing aids can be present. The arithmetic mean fiber length is from 70 to 200 µm, preferably from 80 to 180 µm and in particular from 10 to 150 µm. It is said in that by virtue of the low fiber length only a small further shortening of the fiber length occurs during incorporation.

EP-A-2 924 068 relates to polyamide compositions which comprise at least one hollow or solid spherical filler/reinforcing material made of glass with a mean particle size of from 7 µm to 200 µm, and also chopped long glass fibers with an initial length in the range from 1 to 50 mm. By way of example, glass spheres with a particle size of 35 µm and chopped glass fibers with a mean fiber length of 4.5 mm are used. Initial lengths stated for the long glass fibers are preferably from 1 to 10 mm, in particular from 2 to 7 mm. The compositions moreover comprise a quantity of from 0.1 to 40% by weight of melamine cyanurate, preferably from 1 to 20% by weight. It is also possible to make concomitant use of by way of example from 0.01 to 30% by weight of titanium dioxide, preferably from 1 to 25% by weight, in particular from 5 to 20% by weight. It is stated that, as a result of the processing to the molding composition or to give the product, the length of the glass fibers in the molding composition or in the product can be smaller than that of the glass fibers originally used.

WO 2012/080403 A1 relates to glow wire-resistant polyamides. The thermoplastic molding compounds contain a thermoplastic polyamide, melamine cyanurate, an organic phosphorous compound on the basis of DOPO as the skeletal structure, a fibrous filler having an aspect ratio (L/D) of 4 to 25 and a mean arithmetic fiber length of 40 to 250 µm.

The DOPO is necessary to achieve the desired glow wire-resistance when employing the shorter fibers with mean arithmetic fiber length of 40 to 250 µm, see examples E1 to E4 and the GWFI 960 °C /1.0 mm results listed in the table.

It was an object of the present invention to provide flame-retardant thermoplastic molding compositions which have good mechanical properties, good heat resistance and good flame retardancy - specifically in relation to glow-wire resistance.

The object is achieved in the invention via a thermoplastic molding composition comprising
a) from 30 to 92.5% by weight of at least one thermoplastic polyamide as component A,
b) from 1 to 15% by weight of melamine cyanurate as component B,
c) from 1 to 50% by weight of glass microspheres with an arithmetic mean sphere diameter d₅₀ in the range from 10 to 100 µm, as component C,
d) from 5 to 20% by weight of short glass fibers with an arithmetic mean fiber length d₅₀ of from 100 to 900 µm, as component D,
e) from 0.5 to 10% by weight of other additional substances and processing aids as component E,
where the sum of the percentages by weight of components A to E is 100% by weight, and the thermoplastic molding composition contains less than 0.1 wt%, based on the total weight of the molding composition, of organic phosphorous compounds which contain 9,10-dihydro-9-oxa-10-phosphaphenanthrene-10-oxide (DOPO) structures in their skeletal structure.

The object is moreover achieved via a process for the production of such a thermoplastic molding composition via mixing of components A to E.

The invention also provides the use of the thermoplastic molding composition for the production of fibers, films and moldings, and also fibers, films or moldings made of such a thermoplastic molding composition. The invention further provides a process for the production of the fibers, films or moldings via extrusion, injection molding or blow molding of the thermoplastic molding composition.

A mixture of glass microspheres and short glass fibers of a specific length distribution has proven to be particularly suitable for fire-protected polyamide formulations comprising melamine cyanurate as flame retardant, as is apparent from the attached examples, to which reference is made below. Combinations of chopped glass and glass spheres (comp 1-comp 3) do not provide the required glow-wire resistance (GWFI 960/1.0 mm). The use of glass spheres as single filler component can provide the required fire performance, but the molding compositions have inadequate heat resistance (HDT-A) (comp 4-comp 5). The use of ground glass or chopped glass alone also leads to poorer fire performance (comp 6-comp 7). Only the formulations of the invention, made of glass spheres and short glass fibers of a specific length distribution, comply with the requirements placed upon heat resistance and glow-wire resistance (Inv 1-Inv 3).

Without being bound by any theory, the glass spheres employed according to the present invention improve the known behavior when burning and thereby help to achieve the necessary glow wire-resistance in order to fulfill the GWFI 960 °C/1.0 mm and 1.5 mm test.

Therefore, there is no need to include an organic phosphorous compound on the basis of 9,10-dihydro-9-oxa-10-phosphaphenanthrene-10-oxide (DOPO) as the skeletal structure. Therefore, the thermoplastic molding composition contains less than 0.1 wt%, based on the total weight of the molding composition, of organic phosphorous compounds which contain 9,10-dihydro-9-oxa-10-phosphaphenanthrene-10-oxide (DOPO) structures in their skeletal structure.

According to one preferred embodiment of the present invention, the thermoplastic molding composition does not contain / is free from organic phosphorous compounds on the basis of 9,10-dihydro-9-oxa-10-phosphaphenanthrene-10-oxide (DOPO) as the skeletal structure. In other words, the molding compositions are free from organic phosphorous compounds which contain 9,10-dihydro-9-oxa-10-phosphaphenanthrene-10-oxide (DOPO) structures in their skeletal structure. Thus, no organic phosphorous compounds containing a repeating unit or structural unit as depicted in formula IIa on page 6 of WO 2012/080403 are contained in the thermoplastic composition of the present invention. Specifically, the molding compositions are free from Ukanol^{®} DOP or DOPO compounds as depicted on pages 7 to 18 of WO 2012/080403. Specifically, the molding compositions according to the present invention contain none of the above-mentioned DOPO compounds or DOPO derivatives.

Preferred thermoplastic molding compositions also comprise a specific quantity of pigments/titanium dioxide. The quantities used in particular gives suitable molding compositions which comply with the requirements placed on heat resistance and glow-wire resistance.

The thermoplastic molding compositions comprise, as component A, from 30.0% to 92.5% by weight, preferably from 50.0% to 85.0% by weight, with preference from 55.0 to 65.0% by weight, in particular from 61.0 to 63.0% by weight, of at least one thermoplastic polyamide.

The intrinsic viscosity of the polyamide of the molding compositions of the invention is generally from 90 to 210 ml/g, preferably from 110 to 160 ml/g, determined in 0.5% by weight solution in 96.0% by weight of sulfuric acid at 25°C according to the ISO 307.

Preference is given to semicrystalline or amorphous resins with molecular weight (weight-average) at least 5000, of the type described by way of example in the US Patents 2,071,250, 2,071,251, 2,130,523, 2,130,948, 2,241,322, 2,312,966, 2,512,606 and 3,393,210.

Examples here are polyamides which derive from lactams having from 7 to 13 ring members, for example polycaprolactam, polycapryllactam and polylaurolactam, and also polyamides which are obtained via reaction of dicarboxylic acids with diamines.

Dicarboxylic acids that can be used are alkanedicarboxylic acids having from 6 to 12 carbon atoms, in particular from 6 to 10 carbon atoms, and aromatic dicarboxylic acids. Mention may be made here of just a few acids: adipic acid, azelaic acid, sebacic acid, dodecanedioic acid and terephthalic and/or isophthalic acid.

Particularly suitable diamines are alkanediamines having from 6 to 12 carbon atoms, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane or 1,5-diamino-2-methylpentane.

Preferred polyamides are polyhexamethyleneadipamide, polyhexamethylenesebacamide and polycaprolactam, and also 6/66 copolyamides, in particular having from 5 to 95% by weight content of caprolactam units.

Polyamides that are further suitable are obtainable from ω-aminoalkyl nitriles, for example aminocapronitrile (PA 6) and adipodinitrile with hexamethylenediamine (PA 66) by what is known as direct polymerization in the presence of water, as described by way of example in DE-A 10313681, EP-A 1198491 and EP 922065.

Mention may moreover also be made of polyamides which are obtainable by way of example via condensation of 1,4-diaminobutane with adipic acid at elevated temperature (polyamide 4,6). Production processes for polyamides of this structure are described by way of example in EP-A 38 094, EP-A 38 582 and EP-A 039 524.

Polyamides further suitable are those obtainable by copolymerization of two or more of the abovementioned monomers, and mixtures of a plurality of polyamides in any desired mixing ratio.

The melting point of suitable polyamides is preferably below 265°C.

The following non-exhaustive list contains the polyamides mentioned and also other polyamides within the meaning of the invention, and the monomers comprised.

### AB polymers:

| | |
|---|---|
| PA 4 | pyrrolidone |
| PA 6 | ε-caprolactam |
| PA 7 | ethanolactam |
| PA 8 | capryllactam |
| PA 9 | 9-aminopelargonic acid |
| PA 11 | 11-aminoundecanoic acid |
| PA 12 | laurolactam |

### AA/BB polymers:

| | |
|---|---|
| PA 46 | tetramethylenediamine, adipic acid |
| PA 66 | hexamethylenediamine, adipic acid |
| PA 69 | hexamethylenediamine, azelaic acid |
| PA 610 | hexamethylenediamine, sebacic acid |
| PA 612 | hexamethylenediamine, decanedicarboxylic acid |
| PA 613 | hexamethylenediamine, undecanedicarboxylic aid |
| PA 1212 | 1,12-dodecanediamine, decanedicarboxylic acid |
| PA 1313 | 1,13-diaminotridecane, undecanedicarboxylic acid |
| PA6T | hexamethylendiamine, terephthalic acid |
| PA MXD6 | m-xylylenediamine, adipic acid |

### AA/BB polymers:

| | |
|---|---|
| PA6I | hexamethylenediamine, isophthalic acid |
| PA 6-3-T | trimethylhexamethylenediamine, terephthalic acid |
| PA 6/6T | (see PA 6 and PA 6T) |
| PA 6/66 | (see PA 6 and PA 66) |
| PA 6/12 | (see PA 6 and PA 12) |
| PA 66/6/610 | (see PA 66, PA 6 and PA 610) |
| PA 6I/6T | (see PA 61 and PA 6T) |
| PAPACM 12 | diaminodicyclohexylmethane, laurolactam |
| PA 6I/6T/PACMT | as PA 6I/6T + diaminodicyclohexylmethane, terephthalic acid |
| PA 6T/6I/MACMT | as PA 6I/6T + dimethyldiaminocyclohexylmethane, terephthalic |
| | acid |
| PA 6T/6I/MXDT | as PA 6I/6T + m-xylylenediamine, terephthalic acid |
| PA 12/MACMI | laurolactam, dimethyldiaminodicyclohexylmethane, isophthalic acid |
| PA 12/MACMT | laurolactam, dimethyldiaminodicyclohexylmethane, terephthalic acid |
| PA PDA-T | phenylenediamine, terephthalic acid |

Component A is optionally a blend made of at least one aliphatic polyamide and of at least one semiaromatic or aromatic polyamide.

Materials used here in the invention as component A are by way of example mixtures which comprise polyamide 6 and polyamide 6.6 and optionally also polyamide 6I/6T. It is preferable here to operate with a predominance of polyamide 6.6. The quantity of polyamide 6 is preferably from 5.0 to 50.0% by weight, particularly preferably from 10.0 to 30.0% by weight, based on the quantity of polyamide 6.6. When polyamide 6I/6T is used concomitantly, the proportion thereof is preferably from 10 to 25.0% by weight, particularly preferably from .0 to 25.0% by weight, based on the quantity of polyamide 6.6.

Alongside, or instead of, polyamide 6I/6T it is also possible to use polyamide 6I or polyamide 6T or a mixture thereof.

In particular, polyamide 6, polyamide 66 and copolymers or mixtures thereof are used in the invention. The intrinsic viscosity of the polyamide 6 or polyamide 66 is preferably in the range from 80 to 180 ml/g, in particular from 85 to 160 ml/g, in particular from 90 to 140 ml/g, determined in 0.5% by weight solution in 96% by weight sulfuric acid at 25°C in accordance with ISO 307.

The intrinsic viscosity of a suitable polyamide 66 is in the range from 110 to 170 ml/g, particularly preferably from 130 to 160 ml/g.

For suitable semicrystalline and amorphous polyamides, reference may moreover be made to DE 10 2005 049 297. The intrinsic viscosity of these is from 90 to 210 ml/g, preferably from 110 to 160 ml/g, determined in 0.5% by weight solution in 96% by weight sulfuric acid at 25°C according to ISO 307.

From 0 to 10% by weight, preferably from 0 to 5% by weight, of the polyamide 6 or polyamide 66 can be replaced by semiaromatic polyamides. It is particularly preferable not to make concomitant use of any semiaromatic polyamides.

The thermoplastic molding compositions comprise, as component B, from 1 to 15% by weight, preferably from 3.0 to 10.0% by weight, particularly preferably from 5.0 to 10.0% by weight, in particular from 5.0 to 7.0% by weight, for example 6.0% by weight, of melamine cyanurate.

The melamine cyanurate that is preferably suitable in the invention is a reaction product of preferably equimolar quantities of melamine (formula I) and cyanuric acid/isocyanuric acid (formulae la and Ib)

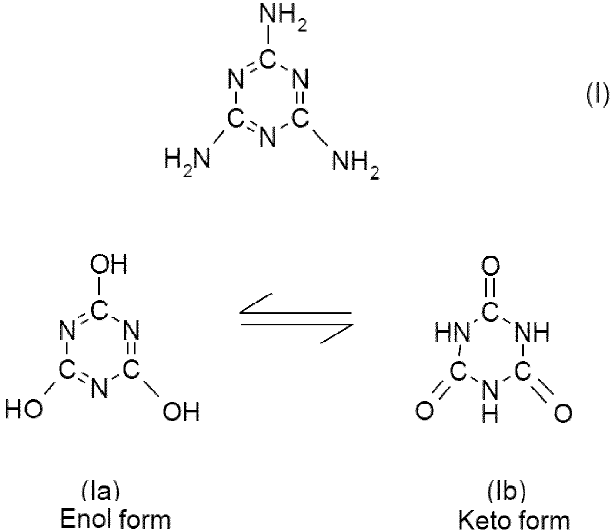

It is obtained by way of example via reaction of aqueous solutions of the starting compounds at from 90 to 100°C. The product obtainable commercially is a white powder with mean grain size d₅₀ from 1.5 to 7 µm, preferably below 4.7 µm, and with d₉₉ value below 50 µm, preferably below 25 µm.

Reference may also be made to EP-A-2 924 068, paragraph [0051] for the description of component B.

The thermoplastic molding compositions of the invention comprise, as component C, from 1 to 50% by weight, particularly preferably from 5.0 to 40.0% by weight, more preferably from 10.0 to 30.0% by weight, even more preferably from 20.0 to 25.0% by weight, specifically from 22.0 to 25.0% by weight, for example 22.0% by weight, of glass microspheres with an arithmetic mean sphere diameter d₅₀ in the range from 10 to 100 µm.

The glass microspheres here can be hollow or solid. The arithmetic mean sphere diameter d₅₀ is preferably in the range from 20 to 70 µm, particularly preferably from 25 to 50 µm, specifically from 30 to 45 µm. Hollow glass spheres are obtainable by way of example as Spheriglass^{®} Hollow Spheres from Potters Inc., Valley Forge PA, USA. Solid glass spheres are likewise obtainable as Spheriglass^{®} Solid Spheres. Glass microspheres are moreover obtainable as Micropearl^{®} 050-40-216 from Sovitec GmbH. The type of glass in the glass microspheres can be selected freely. By way of example, it is soda lime glass, soda lime-silica glass or borosilicate glass.

The arithmetic mean sphere diameter d₅₀ is determined here by way of example via photographic methods where the diameters of 100, preferably 500, randomly selected glass spheres are determined in a photograph of glass spheres, and the arithmetic mean value thereof is calculated. The particle size determination can also be achieved with the aid of a laser granulometer. It is also possible to use image-assisted methods where the spheres fall past a high-speed camera and the digital images are evaluated. A corresponding method is available with the name Camsizer.

The glass microspheres can have a surface modification or size. Preferred surface modifications are based on silanes and siloxanes. Particular preference is given to aminoalkyl-, glycidic-ether-, alkenyl-, acryloxyalkyl- and/or methacryloxyalkyl-functionalized trialkoxysilanes, or else a combination thereof. Particular preference is given to surface modifications based on aminoalkyltrialkoxysilanes. The quantity of the surface modification can be from 0.01 to 2% by weight, particularly preferably from 0.1 to 1% by weight, based on the quantity of glass microspheres of component C.

The glass spheres 050-40-216 marketed by Sovitec GmbH are marketed as soda lime glass (PBT treated surface).

The thermoplastic molding compositions comprise, as component D, from 5 to 20% by weight, preferably from 6.0 to 15.0% by weight, in particular from 7.0 to 10.0% by weight, specifically 8.0% by weight, of short glass fibers with an arithmetic mean fiber length d₅₀ from 100 to 900 µm. The fiber length is preferably from 120 to 700 µm, particularly preferably from 150 to 500 µm, specifically from 200 to 400 µm (d₅₀ value). The arithmetic mean fiber diameter is preferably from 5 to 25 µm, particularly preferably from 6 to 20 µm and in particular from 9 to 18 µm. E glass may be mentioned as preferred glass fiber. The desired fiber length can be established by way of example via grinding in a ball mill or in a chopping mill, with resultant production of a fiber length distribution. The reduction of the fiber length leads, when the mean fiber length is less than 200 µm, to a flowable bulk product which can be incorporated in the manner of a powder into the polymer by mixing. By virtue of the low fiber length, only slight further shortening of the fiber length occurs during incorporation. The fiber content is usually determined after ashing of the polymer. For determination of the fiber length distribution, the ash residue is generally taken up in silicone oil and photographed under a microscope. From the images it is possible to measure the length of at least 500 fibers and calculate the arithmetic mean value (d₅₀ value). Simultaneously with the determination of the d₅₀ value, the d₁₀ value and d₉₀ value of the glass fiber length distribution can also be determined. The meaning of the d₁₀ value here is that 10% of the glass fibers in a sample have the length x. The mean fiber length can also be determined in accordance with WN 100 303, and the fiber diameter can also be determined in accordance with WN 100 306. The abovementioned photographic methods can also be used. Arithmetic mean fiber lengths(d₅₀ value) of from 40 to 250 µm, preferably from 50 to 150 µm and in particular from 60 to 120 µm have proven to be particularly advantageous for the present molding compositions of the invention - after processing via extrusion and/or injection molding. The short glass fibers of component D can have been equipped with a suitable size system or with a coupling agent or coupling agent system. It is preferable to use a size system or a coupling agent based on silane. Suitable coupling agents based on silane are described by way of example in paragraph [0044] in EP-A-2 924 068.

Preferred coupling agents or sizes are silane compounds from the group of aminopropyltrimethoxysilane, aminobutyltrimethoxysilane, aminopropyltriethoxysilane, aminobutyltriethoxysilane, and also the corresponding silanes which comprise a glycidyl or carboxy group as substituent. The quantity of coupling agent can preferably be from 0.05 to 2% by weight, based on component D, particularly preferably from 0.25 to 1.5% by weight, specifically from 0.5 to 1.0% by weight.

The thermoplastic molding compositions comprise, as component E, from 0.5 to 10% by weight, preferably from 1.0 to 6.0% by weight, particularly preferably from 2.0 to 4.0% by weight, in particular 2.8% by weight, of other additional substances and processing aids.

Component E is preferably selected from lubricants, such as metal soaps, ester waxes and amide waxes, and stabilizers such as antioxidants, light stabilizers, metal deactivators, phosphites and phosphonites, nitrones, thiosynergists, copper salts, nucleating agents, acid scavengers, pigments and carbon blacks. It is also possible to use oxidized polyethylene waxes as lubricants.

Component E preferably comprises, based on the sum of the percentages by weight of components A to E, which is 100% by weight, from 0.1 to 5.0% by weight of pigments, particularly preferably from 0.2 to 4.5% by weight, in particular from 0.5 to 4.0% by weight.

It is particularly preferably here as to use the abovementioned quantity of titanium dioxide as pigment.

Suitable grades of titanium dioxide are described as component E in EP-A-2 924 068.

It has been found in the invention that even small quantities of titanium dioxide can achieve adequate coloring of the thermoplastic molding compositions of the invention, combined with adequate heat stabilization and flame retardancy.

Concomitant use can also be made of other white pigments such as ZnO, ZrO₂, BaSO₄ and ZnS. It is preferable to avoid concomitant use of these white pigments.

Heat stabilizers are conventional stabilizers based on sterically hindered phenols, the quantity used of these preferably being from 0.05 to 0.50% by weight. Quantities preferably used with processing aids are from 0.10 to 0.50% by weight.

It is moreover also possible to make concomitant use of further flame retardants.

In one embodiment of the invention, no halogen-containing flame retardants are used in the thermoplastic molding compositions of the invention. Halogen-free and/or phosphorus-containing flame retardants can be used additionally here.

Concomitant use of a laser absorber is also possible, cf. EP-A-2 924 068, paragraph [0021].

It is also possible, if necessary, to make concomitant use of functional polymers. These can by way of example be elastomer polymers (often also termed impact-modifier elastomers or rubber).

Very generally, these are copolymers which are preferably composed of at least two of the following monomers: ethylene, propylene, butadiene, isobutene, isoprene, chloroprene, vinyl acetate, styrene, acrylonitrile, and acrylic or methacrylic esters having from 1 to 18 carbon atoms in the alcohol component.

Polymers of this type are described, for example, in Houben-Weyl, Methoden der organischen Chemie, Vol. 14/1 (Georg-Thieme-Verlag, Stuttgart, Germany, 1961), pages 392-406, and in the monograph by C.B. Bucknall, "Toughened Plastics" (Applied Science Publishers, London, UK, 1977).

Some preferred types of these elastomers are described below.

Preferred types of elastomers are those known as ethylene-propylene (EPM) and ethylene-propylene-diene (EPDM) rubbers.

EPM rubbers generally have practically no residual double bonds, whereas EPDM rubbers may have from 1 to 20 double bonds per 100 carbon atoms.

Examples which may be mentioned of diene monomers for EPDM rubbers are conjugated dienes, such as isoprene and butadiene, non-conjugated dienes having from 5 to 25 carbon atoms, such as 1,4-pentadiene, 1,4-hexadiene, 1,5-hexadiene, 2,5-dimethyl-1,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricyclodienes, such as 3-methyltricyclo[5.2.1.0^{2,6}]-3,8-decadiene, and mixtures of these. Preference is given to 1,5-hexadiene, 5-ethylidenenorbornene and dicyclopentadiene. The diene content of the EPDM rubbers is preferably from 0.5 to 50% by weight, in particular from 1 to 8% by weight, based on the total weight of the rubber.

EPM and EPDM rubbers may preferably also have been grafted with reactive carboxylic acids or with derivatives of these. Examples of these are acrylic acid, methacrylic acid and derivatives thereof, e.g. glycidyl (meth)acrylate, and also maleic anhydride.

Copolymers of ethylene with acrylic acid and/or methacrylic acid and/or with the esters of these acids are another group of preferred rubbers. The rubbers may also comprise dicarboxylic acids, such as maleic acid and fumaric acid, or derivatives of these acids, e.g. esters and anhydrides, and/or monomers comprising epoxy groups. These monomers comprising dicarboxylic acid derivatives or comprising epoxy groups are preferably incorporated into the rubber by adding to the monomer mixture monomers comprising dicarboxylic acid groups and/or epoxy groups and having the general formulae I, II, III or IV below:

R¹C(COOR²)=C(COOR³)R⁴ (I)

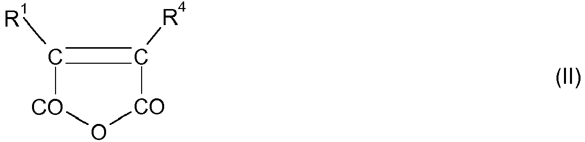

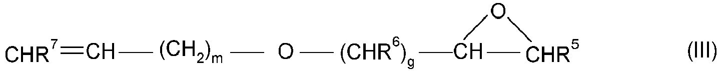

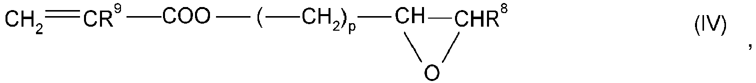

where R¹ to R⁹ are hydrogen or alkyl groups having from 1 to 6 carbon atoms, and m is a whole number from 0 to 20, g is a whole number from 0 to 10, and p is a whole number from 0 to 5.

It is preferable that the moities R¹ to R⁹ are hydrogen, where m is 0 or 1 and g is 1. The corresponding compounds are maleic acid, fumaric acid, maleic anhydride, allyl glycidyl ether, and vinyl glycidyl ether.

Preferred compounds of the formulae I, II and IV are maleic acid, maleic anhydride and (meth)acrylates comprising epoxy groups, such as glycidyl acrylate and glycidyl methacrylate, and the esters with tertiary alcohols, such as tert-butyl acrylate. Although the latter have no free carboxy groups, their behavior approximates to that of the free acids and they are therefore termed monomers with latent carboxy groups.

The copolymers are advantageously composed of from 50 to 98% by weight of ethylene, from 0.1 to 20% by weight of monomers comprising epoxy groups and/or methacrylic acid and/or monomers comprising anhydride groups, the remaining amount being (meth)acrylates.

Particular preference is given to copolymers of:
from 50 to 98% by weight, in particular from 55 to 95% by weight, of ethylene,
from 0.1 to 40% by weight, in particular from 0.3 to 20% by weight, of glycidyl acrylate and/or glycidyl methacrylate, (meth)acrylic acid, and/or maleic anhydride, and from 1 to 45% by weight, in particular from 10 to 40% by weight, of n-butyl acrylate and/or 2-ethylhexyl acrylate.

Other preferred (meth)acrylates are the methyl, ethyl, propyl, isobutyl and tert-butyl esters.

Comonomers which may also be used alongside these are vinyl esters and vinyl ethers.

The ethylene copolymers described above may be prepared by processes known per se, preferably by random copolymerization at high pressure and elevated temperature. Appropriate processes are well known.

Other preferred elastomers are emulsion polymers whose preparation is described, for example, by Blackley in the monograph "Emulsion Polymerization". The emulsifiers and catalysts which can be used are known per se.

In principle it is possible to use homogeneously structured elastomers or else those with a shell structure. The shell-type structure is determined by the sequence of addition of the individual monomers. The morphology of the polymers is also affected by this sequence of addition.

Monomers which may be mentioned here, merely as examples, for the preparation of the rubber fraction of the elastomers are acrylates, such as n-butyl acrylate and 2-ethylhexyl acrylate, corresponding methacrylates, butadiene and isoprene, and also mixtures of these. These monomers may be copolymerized with other monomers, such as styrene, acrylonitrile, vinyl ethers and with other acrylates or methacrylates, such as methyl methacrylate, methyl acrylate, ethyl acrylate or propyl acrylate.

The soft or rubber phase (with glass transition temperature below 0°C) of the elastomers may be the core, the outer envelope or an intermediate shell (in the case of elastomers whose structure has more than two shells). Elastomers having more than one shell may also have more than one shell composed of a rubber phase.

If one or more hard components (with glass transition temperatures above 20°C) are involved, besides the rubber phase, in the structure of the elastomer, these are generally prepared by polymerizing, as principal monomers, styrene, acrylonitrile, methacrylonitrile, α-methylstyrene, p-methylstyrene, acrylates or methacrylates, such as methyl acrylate, ethyl acrylate or methyl methacrylate. Besides these, it is also possible to use relatively small proportions of other comonomers here.

It has proven advantageous in some cases to use emulsion polymers which have reactive groups at the surface. Examples of groups of this type are epoxy, carboxy, latent carboxy, amino and amide groups, and also functional groups which may be introduced by concomitant use of monomers of the general formula 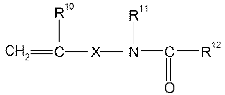 where the substituents may be defined as follows:
- R¹⁰: is hydrogen or a C₁-C₄-alkyl group,
- R¹¹: is hydrogen or a C₁-C₈-alkyl group or aryl group, in particular phenyl,
- R¹²: is hydrogen, a C₁-C₁₀-alkyl group, C₆-C₁₂-aryl group or -OR¹³
- R¹³: is a C₁-C₈-alkyl group or C₆-C₁₂-aryl group, optionally with substitution by O- or N-comprising groups,
- X: is a chemical bond, a C₁-C₁₀-alkylene group or C₆-C₁₂-arylene group or

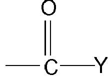

- Y: is O-Z or NH-Z, and
- Z: is a C₁-C₁₀-alkylene group or C₆-C₁₂-arylene group.

The graft monomers described in EP-A 208 187 are also suitable for introducing reactive groups at the surface.

Other examples which may be mentioned are acrylamide, methacrylamide and substituted acrylates or methacrylates, such as (N-tert-butylamino)ethyl methacrylate, (N,N-dimethylamino)ethyl acrylate, (N,N-dimethylamino)methyl acrylate and (N,N-diethylamino)ethyl acrylate.

The particles of the rubber phase may also have been crosslinked. Examples of crosslinking monomers are 1,3-butadiene, divinylbenzene, diallyl phthalate and dihydrodicyclopentadienyl acrylate, and also the compounds described in EP-A 50 265.

It is also possible to use the monomers known as graft-linking monomers, i.e. monomers having two or more polymerizable double bonds which react at different rates during the polymerization. Preference is given to the use of compounds of this type in which at least one reactive group polymerizes at about the same rate as the other monomers, while the other reactive group (or reactive groups), for example, polymerize(s) significantly more slowly. The different polymerization rates give rise to a certain proportion of unsaturated double bonds in the rubber. If another phase is then grafted onto a rubber of this type, at least some of the double bonds present in the rubber react with the graft monomers to form chemical bonds, i.e. the phase grafted on has at least some degree of chemical bonding to the graft base.

Examples of graft-linking monomers of this type are monomers comprising allyl groups, in particular allyl esters of ethylenically unsaturated carboxylic acids, for example allyl acrylate, allyl methacrylate, diallyl maleate, diallyl fumarate and diallyl itaconate, and the corresponding monoallyl compounds of these dicarboxylic acids. Besides these there is a wide variety of other suitable graft-linking monomers. For further details reference may be made here, for example, to US-PS 4 148 846.

The proportion of these crosslinking monomers in the impact-modifying polymer is generally up to 5% by weight, preferably not more than 3% by weight, based on the impact-modifying polymer.

Some preferred emulsion polymers are listed below. Mention may first be made here of graft polymers with a core and with at least one outer shell, and having the following structure:

| Type | Monomers for the core | Monomers for the envelope |
|---|---|---|
| I | 1,3-butadiene, isoprene, n-butyl acrylate, ethylhexyl acrylate, or a mixture of these | styrene, acrylonitrile, methyl methacrylate |
| II | as I, but with concomitant use of crosslinking agents | as I |
| III | as I or II | n-butyl acrylate, ethyl acrylate, methyl acrylate, 1,3-butadiene, isoprene, ethylhexyl acrylate |
| IV | as I or II | as I or III, but with concomitant use of monomers having reactive groups, as described herein |
| V | styrene, acrylonitrile, methyl methacrylate, or a mixture of these | first envelope composed of monomers as described under I and II for the core, second envelope as described under I or IV for the envelope |

These graft polymers, in particular ABS polymers and/or ASA polymers, are preferably used in amounts of up to 40% by weight for the impact-modification of PBT optionally in a mixture with up to 40% by weight of polyethylene terephthalate. Blend products of this type are obtainable with the trademark Ultradur^{®}S (previously Ultrablend^{®}S from BASF AG).

Instead of graft polymers whose structure has more than one shell, it is also possible to use homogeneous, i.e. single-shell, elastomers composed of 1,3-butadiene, isoprene and n-butyl acrylate or from copolymers of these. These products, too, may be prepared by concomitant use of crosslinking monomers or of monomers having reactive groups.

Examples of preferred emulsion polymers are n-butyl acrylate-(meth)acrylic acid copolymers, n-butyl acrylate-glycidyl acrylate or n-butyl acrylate-glycidyl methacrylate copolymers, graft polymers with an inner core composed of n-butyl acrylate or based on butadiene and with an outer envelope composed of the abovementioned copolymers, and copolymers of ethylene with comonomers which supply reactive groups.

The elastomers described may also be prepared by other conventional processes, e.g. by suspension polymerization.

Preference is also given to silicone rubbers, as described in DE-A-37 25 576, EP-A-235 690, DE-A-38 00 603 and EP-A-319 290.

For description of other possible additives, for example antioxidants, UV stabilizers, gamma-radiation stabilizers, hydrolysis stabilizers, heat stabilizers, antistatic agents, emulsifiers, nucleating agents, plasticizers, processing aids, impact modifiers, dyes and pigments, reference can also be made to EP-A-2 924 068, in particular to component L described therein. Other possible fillers or reinforcing materials are described as component K in that document. Other possible flame retardants are described as component H in that document. Possible laser absorbers are described as component G in that document. Other possible lubricants and/or mold-release agents are described as component F in that document.

The thermoplastic molding compositions of the invention are produced via mixing of components A to G.

This mixing can take place in any of the suitable apparatuses.

The thermoplastic molding compositions of the invention are used for the production of fibers, films and moldings. To this end, the thermoplastic molding compositions are produced via melting, extrusion and subsequent shaping of the thermoplastic molding composition.

The thermoplastic molding compositions of the invention can be produced by known processes, by mixing the starting components in conventional mixers, and then extruding same. Suitable processing machinery is described in: Handbuch der Kunststoffextrusion [Plastics extrusion handbook], vol. 1 Grundlagen [Principles], eds. F. Hensen, W. Knappe, H. Potente, 1989, pp. 3 to 7 (ISBN 3-446-14339-4) and in vol. 2 Extrusionsanlagen [Extrusion systems], 1986 (ISBN 3-446-14329-7). The extrudates can be cooled and comminuted. It is also possible to premix individual components and then to add the remaining starting materials individually and/or likewise after mixing - or else in the form of concentrates in a carrier polymer (masterbatch). The mixing temperatures are generally in the range from 230 to 320°C.

The thermoplastic molding compositions of the invention feature good flame retardancy and excellent glow-wire resistance. These materials are suitable for the production of fibers, films and moldings of any type. Some examples are mentioned here: plug connectors, plugs, plug parts, cable harness components, circuit mounts, circuit-mount components, three-dimensionally injection-molding circuit mounts, electrical connection elements and mechatronic components.

Moldings preferred in the invention are (electrical) switches, plugs, plug connectors and housings for electronic or electrical components.

The moldings or semifinished products to be produced in the invention from the thermoplastic molding compositions can by way of example be used in the motor vehicle, electrical, electronics, telecommunications, information technology, entertainment or computer industry, in vehicles and other means of transportation, in ships, in spacecraft, in the household, in office equipment, in sports equipment, in medicine, and also generally products and parts of buildings requiring increased fire protection.

Possible uses of polyamides with improved flowability for the kitchen and household sectors are production of components for kitchen appliances, for example deep-fat fryers, smoothing irons, knobs/buttons, and also applications in the garden and leisure sector.

The invention also provides corresponding fibers, films or moldings made of a thermoplastic molding composition of the invention, and also processes for production thereof via extrusion, injection molding and blow molding.

The thermoplastic molding compositions of the invention, and fibers, films and moldings produced therefrom exhibit improvements in particular in glow-wire resistance in conjunction with good mechanical properties and good heat resistance.

The examples below provide further explanation of the invention.

Inventive examples:
Appropriate plastics molding compositions were prepared by compounding in order to demonstrate the glow-wire resistance improvements described in the invention. To this end, the individual components were mixed in a ZSK 26 (Berstorff) twin-screw extruder at about 250 to 270°C with flat temperature profile and 20 kg/h throughpout, discharged in the form of strand, cooled until pelletizable and pelletized.

The test samples for the tests listed in table 1 were injection-molded in an Arburg 420C injection-molding machine at melt temperature about 250 to 290°C and mold temperature about 80°C.

Flame retardancy of the molding compositions was determined by the UL 94 V method (Underwriters Laboratories Inc. "Standard of Safety, Test for Flammability of Plastic Materials for Parts in Devices and Appliances", pp. 14 to 18, Northbrook, 1998).

Glow-wire resistance was determined by the GWFI (glow-wire flammability index) glow-wire ignition test in accordance with DIN 60695-2-12. The GWFI test, carried out on three test samples (for example plaques measuring 60 × 60 × 1.0 mm or disks), used a glowing wire at temperatures of from 550 to 960°C to determine the maximal temperature leading to no ignition during a time including the period of exposure to the glow-wire in three successive tests. The test sample was pressed by a force of 1 newton for a period of 30 seconds against a heated glow-wire. The penetration depth of the glow-wire was restricted to 7 mm. The test is considered passed if the afterflame time of the test sample after removal of the glow-wire if less than 30 seconds and if tissue paper placed under the test sample does not ignite.

The following components were used in experiments:
Component A/1: Polyamide 6 with intrinsic viscosity IV 125 ml/g, measured in 0.5% by weight solution in 96% by weight sulfuric acid at 25°C in accordance with ISO 307. (Ultramid^{®} B24 from BASF SE was used).

Component B: Melamine cyanurate with average particle size -2.6 µm (Melapur^{®} MC 25 from BASF SE).

Component C: Commercially available glass microspheres with polyester size and with average particle size distribution d₅₀ from 30 to 45 µm. (Micropearl^{®} 050-40-216 from Sovitec GmbH was used).

Component D/1: Standard chopped glass fiber for polyamides, L = 4.0 mm, D = 10 µm.

Component D/2: Short glass fiber made of E glass, average length (d₅₀) ~400 µm, D = 10 µm, bulk density -140 g/L.

Component D/3: Short glass fiber made of E glass, average length (d₅₀) ~210 µm, D = 10 µm, bulk density -330 g/L.

Fiber lengths were determined in accordance with WN 100 303, diameters were determined in accordance with WN 100 306 or as described above.

Component E: 0.3% of 3,3'-bis(3,5-di-tert-butyl-4-hydroxyphenyl)-N,N'-hexamethylene-dipropionamide (CAS No. 23128-74-7), 0.5% of ethylenebisstearamide (CAS No. 100-30-5), and 2% of titanium dioxide (CAS No. 13463-67-7) were used as further additional substances in all formulations.

The sum of the proportions of components A) to E) in table 1 is 100% by weight. Table 1 shows the constitutions of the molding compositions and the results of the tests.

From the data in the table it is clearly apparent that the combinations of chopped glass and glass spheres (comp 1-comp 3) do not comply with the required glow-wire resistance (GWFI 960). Compliance with the required fire performance can be achieved by using glass spheres as sole filler component, but the molding compositions have inadequate heat resistance (comp 4-comp 5). Sole use of ground glass or chopped glass also leads to impaired fire performance (comp 6-comp 7). Only the formulations of the invention, made of glass spheres and short glass fibers comply with the requirements placed upon heat resistance and glow-wire resistance (UL 94 V-2 and GWFI 960°C at 1.0 mm) (Inv 1-Inv 3).

**Table 1**

| Component/ Test method | Comp 1 | Com p 2 | Com p 3 | Inv 1 | Inv 2 | Inv 3 | Com p 4 | Comp 5 | Com p 6 | Comp 7 |
|---|---|---|---|---|---|---|---|---|---|---|
| A/1 (B24) | 67.7 | 62.7 | 61.2 | 61.2 | 61.2 | 62.7 | 67.7 | 62.7 | 62.7 | 62.7 |
| B (MC25) | 4.5 | 4.5 | 6 | 6 | 6 | 4.5 | 4.5 | 4.5 | 4.5 | 4.5 |
| C (glass sphere) | 17 | 22 | 22 | 22 | 22 | 22 | 25 | 30 | | |
| D/1 (chopped glass) | 8 | 8 | 8 | | | | | | | 30 |
| D/2 | | | | | 8 | 8 | | | | |
| D/3 | | | | 8 | | | | | 30 | |
| E (premix) | 2.8 | 2.8 | 2.8 | 2.8 | 2.8 | 2.8 | 2.8 | 2.8 | 2.8 | 2.8 |
| IV/mL/g (ISO 307) | 125 | 126 | 126 | 126 | 129 | 126 | 124 | 123 | 124 | 126 |
| Tensile E modulus/MP a (ISO 527) | 5880 | 6180 | 6270 | 5650 | 5670 | 5540 | 4250 | 4630 | 7620 | 9940 |
| Yield stress/MPa (ISO 527) | 99 | 85 | 83 | 74 | 74 | 75 | 62 | 61 | 106 | 138 |
| Tensile strain at break/% (ISO 527) | 3.0 | 2.6 | 2.5 | 2.7 | 2.6 | 2.8 | 2.7 | 2.0 | 2.4 | 2.1 |
| Impact resistance/kJ / m² (ISO 179/1eU) | 32 | 28 | 29 | 30 | 30 | 27 | 29 | 33 | 40 | 43 |
| Notched impact resistance/kJ / m² (ISO 179/1eA) | 3.2 | 2.4 | 2.3 | 2.4 | 2.4 | 2.5 | 3.1 | 3.1 | 3.7 | 4.2 |
| MVR 275°C/5 Kg (ISO1133) | 130 | 130 | 131 | 176 | 162 | 174 | - | - | - | - |
| HDT/A/°C DIN EN ISO 75 | 192 | 183 | 181 | 142 | 162 | 158 | 71 | 76 | 188 | 206 |
| UL 94 V test (0.8 mm) | V-2 | V-2 | V-2 | V-2 | V-2 | V-2 | V-2 | V-2 | V-2 | n.c. |
| GWFI 960°C/1.0 mm | not passe d | not pass ed | not pass ed | pass ed | passe d | pass ed | pass ed | passe d | not pass ed | not passe d |
| GWFI 960°C/1.5 mm | not passe d | not pass ed | not pass ed | pass ed | passe d | pass ed | pass ed | passe d | not pass ed | not passe d |

## Claims

1. A thermoplastic molding composition comprising
a) from 30 to 92.5% by weight of at least one thermoplastic polyamide as component A,
b) from 1 to 15% by weight of melamine cyanurate as component B,
c) from 1 to 50% by weight of glass microspheres with an arithmetic mean sphere diameter d₅₀ in the range from 10 to 100 µm, as component C,
d) from 5 to 20% by weight of short glass fibers with an arithmetic mean fiber length d₅₀ of from 100 to 900 µm, as component D,
e) from 0.5 to 10% by weight of other additional substances and processing aids as component E,
where the sum of the percentages by weight of components A to E is 100% by weight and the thermoplastic molding composition contains less than 0.1 wt%, based on the total weight of the molding composition, of organic phosphorous compounds which contain 9,10-dihydro-9-oxa-10-phosphaphenanthrene-10-oxide (DOPO) structures in their skeletal structure.

2. The thermoplastic molding composition according to claim 1, wherein component D has an arithmetic mean fiber length d₅₀ of from 120 to 700 µm, preferably from 150 to 500 µm.

3. The thermoplastic molding composition according to claim 1 or 2, wherein the quantity used of component D is from 6.0 to 15.0% by weight, preferably from 7.0 to 10.0% by weight.

4. The thermoplastic molding composition according to any of claims 1 to 3, wherein the quantity of component B used is from 3.0 to 10.0% by weight, preferably from 5.0 to 10.0% by weight, in particular from 5.0 to 7.0% by weight.

5. The thermoplastic molding composition according to any of claims 1 to 4, wherein component E comprises lubricants and stabilizers.

6. The thermoplastic molding composition according to claim 5, wherein the stabilizers are selected from antioxidants, light stabilizers, metal deactivators, phosphites and phosphonites, nitrones, thiosynergists, copper salts, nucleating agents, acid scavengers, pigments, carbon blacks and mixtures thereof.

7. The thermoplastic molding composition according to any of claims 1 to 6, wherein component E comprises, based on the sum of the percentages by weight of components A to E, which is 100% by weight, from 0.1 to 5.0% by weight of pigments, preferably from 0.2 to 4.5% by weight, in particular from 0.5 to 4.0% by weight.

8. The thermoplastic molding composition according to claim 7, wherein component E comprises, based on the sum of the percentages by weight of components A to E, which is 100% by weight, from 1 to 5% by weight of titanium dioxide, preferably from 0.2 to 4.5% by weight, in particular from 0.5 to 4.0% by weight.

9. The thermoplastic molding composition according to any of claims 1 to 8, wherein component C and/or component D is used with surface modification or size, preferably with surface modifications based on silanes or siloxanes, particularly preferably aminoalkyl-, glycidic-ether-, alkenyl-, acryloxyalkyl- and/or methacryloxyalkyl-functionalized trialkoxysilanes, or else on a combination thereof.

10. The thermoplastic molding composition according to any of claims 1 to 9, wherein component A is selected from polyamide 6, polyamide 66 and copolymers or mixtures thereof.

11. The thermoplastic molding composition according to any of claims 1 to 10, wherein the molding composition is free from organic phosphorous compounds which contain 9,10-dihydro-9-oxa-10-phosphaphenanthrene-10-oxide (DOPO) structures in their skeletal structure.

12. A process for the production of a thermoplastic molding composition according to any of claims 1 to 11 via mixing of components A to E.

13. The use of the thermoplastic molding composition according to any of claims 1 to 11 for the production of fibers, films and moldings.

14. A fiber, film or molding made of a thermoplastic molding composition according to any of claims 1 to 11.

15. A process for the production of fibers, films or moldings according to claim 14 via extrusion, injection molding or blow molding of the thermoplastic molding composition according to any of claims 1 to 11.

## Patentansprüche

1. Thermoplastische Formmasse, enthaltend
a) 30 bis 92,5 Gew.-% mindestens eines thermoplastischen Polyamids als Komponente A,
b) 1 bis 15 Gew.-% Melamincyanurat als Komponente B,
c) 1 bis 50 Gew.-% Mikroglaskugeln mit einem arithmetischen mittleren Kugeldurchmesser d₅₀ im Bereich von 10 bis 100 µm als Komponente C,
d) 5 bis 20 Gew.-% Kurzglasfasern mit einer arithmetischen mittleren Faserlänge d₅₀ von 100 bis 900 µm als Komponente D,
e) 0,5 bis 10 Gew.-% weiterer Zusatzstoffe und Verarbeitungshilfsmittel als Komponente E,
wobei die Summe der Gewichtsprozente der Komponenten A bis E 100 Gew.-% ergibt und die thermoplastische Formmasse weniger als 0,1 Gew.-%, bezogen auf das Gesamtgewicht der Formmasse, an organischen Phosphorverbindungen mit 9,10-Dihydro-9-oxa-10-phosphaphenanthren-10-oxid(DOPO)-Strukturen in ihrer Gerüststruktur enthält.

2. Thermoplastische Formmasse nach Anspruch 1, wobei Komponente D eine arithmetische mittlere Faserlänge d₅₀ von 120 bis 700 µm, vorzugsweise von 150 bis 500 µm, aufweist.

3. Thermoplastische Formmasse nach Anspruch 1 oder 2, wobei Komponente D in einer Menge von 6,0 bis 15,0 Gew.-%, vorzugsweise von 7,0 bis 10,0 Gew.-%, eingesetzt wird.

4. Thermoplastische Formmasse nach einem der Ansprüche 1 bis 3, wobei Komponente B in einer Menge von 3,0 bis 10,0 Gew.-%, vorzugsweise von 5,0 bis 10,0 Gew.-%, insbesondere von 5,0 bis 7,0 Gew.-%, eingesetzt wird.

5. Thermoplastische Formmasse nach einem der Ansprüche 1 bis 4, wobei Komponente E Schmiermittel und Stabilisatoren enthält.

6. Thermoplastische Formmasse nach Anspruch 5, wobei die Stabilisatoren ausgewählt sind aus Antioxidantien, Lichtstabilisatoren, Metalldesaktivatoren, Phosphiten und Phosphoniten, Nitronen, Thiosynergisten, Kupfersalzen, Nukleierungsmitteln, Säurefängern, Pigmenten, Rußen und Gemischen davon.

7. Thermoplastische Formmasse nach einem der Ansprüche 1 bis 6, wobei Komponente E 0,1 bis 5,0 Gew.-%, vorzugsweise 0,2 bis 4,5 Gew.-%, insbesondere 0,5 bis 4,0 Gew.-%, bezogen auf die Summe der Gewichtsprozente der Komponenten A bis E, die 100 Gew.-% ergibt, Pigmente enthält.

8. Thermoplastische Formmasse nach Anspruch 7, wobei Komponente E 1 bis 5 Gew.-%, vorzugsweise 0,2 bis 4,5 Gew.-%, insbesondere 0,5 bis 4,0 Gew.-%, bezogen auf die Summe der Gewichtsprozente der Komponenten A bis E, Titandioxid enthält.

9. Thermoplastische Formmasse nach einem der Ansprüche 1 bis 8, wobei Komponente C und/oder Komponente D mit Oberflächenmodifizierung oder Schlichte eingesetzt wird, bevorzugt mit Oberflächenmodifikationen, die auf Silanen oder Siloxanen basieren, besonders bevorzugt Aminoalkyl-, Glycidylether-, Alkenyl-, Acryloxyalkyl- und/oder Methacryloxyalkyl-funktionalisierten Trialkoxysilanen sowie Kombinationen daraus.

10. Thermoplastische Formmasse nach einem der Ansprüche 1 bis 9, wobei Komponente A ausgewählt ist aus Polyamid-6, Polyamid-66 und Copolymeren oder Mischungen davon.

11. Thermoplastische Formmasse nach einem der Ansprüche 1 bis 10, wobei die Formmasse frei von organischen Phosphorverbindungen mit 9,10-Dihydro-9-oxa-10-phosphaphenanthren-10-oxid(DOPO)-Strukturen in ihrer Gerüststruktur ist.

12. Verfahren zur Herstellung einer thermoplastischen Formmasse nach einem der Ansprüche 1 bis 11 durch Vermischen der Komponenten A bis E.

13. Verwendung der thermoplastischen Formmasse nach einem der Ansprüche 1 bis 11 zur Herstellung von Fasern, Folien und Formkörpern.

14. Fasern, Folien oder Formkörper aus einer thermoplastischen Formmasse nach einem der Ansprüche 1 bis 11.

15. Verfahren zur Herstellung von Fasern, Folien oder Formkörpern nach Anspruch 14 durch Extrusion, Spritzgießen oder Blasformen der thermoplastischen Formmasse nach einem der Ansprüche 1 bis 11.

## Revendications

1. Composition de moulage thermoplastique comprenant
a) de 30 à 92,5 % en poids d'au moins un polyamide thermoplastique en tant que composant A,
b) de 1 à 15 % en poids de cyanurate de mélamine en tant que composant B,
c) de 1 à 50 % en poids de microsphères de verre dotées d'un diamètre moyen arithmétique de sphère d₅₀ dans la plage de 10 à 100 µm, en tant que composant C,
d) de 5 à 20 % en poids de fibres de verre courtes dotées d'une longueur moyenne arithmétique de fibre d₅₀ allant de 100 à 900 µm, en tant que composant D,
e) de 0,5 à 10 % en poids d'autres substances supplémentaires et d'auxiliaires de traitement en tant que composant E,
où la somme des pourcentages en poids des composants A à E est de 100 % en poids et la composition de moulage thermoplastique contient moins de 0,1 % en poids, sur la base du poids total de la composition de moulage, de composés phosphoreux organiques qui contiennent des structures de type 9,10-dihydro-9-oxa-10-phosphaphénanthrène-10-oxyde (DOPO) dans leur structure de squelette.

2. Composition de moulage thermoplastique selon la revendication 1, le composant D possédant une longueur moyenne arithmétique de fibre d₅₀ allant de 120 à 700 µm, préférablement de 150 à 500 µm.

3. Composition de moulage thermoplastique selon la revendication 1 ou 2, la quantité utilisée de composant D étant de 6,0 à 15,0 % en poids, préférablement de 7,0 à 10,0 % en poids.

4. Composition de moulage thermoplastique selon l'une quelconque des revendications 1 à 3, la quantité de composant B utilisée étant de 3,0 à 10,0 % en poids, préférablement de 5,0 à 10,0 % en poids, en particulier de 5,0 à 7,0 % en poids.

5. Composition de moulage thermoplastique selon l'une quelconque des revendications 1 à 4, le composant E comprenant des lubrifiants et des stabilisants.

6. Composition de moulage thermoplastique selon la revendication 5, les stabilisants étant choisis parmi des antioxydants, des photostabilisants, des désactivateurs métalliques, des phosphites et des phosphonites, des nitrones, des thiosynergistes, des sels de cuivre, des agents de nucléation, des agents de piégeage d'acide, des pigments, des noirs de carbone et des mélanges correspondants.

7. Composition de moulage thermoplastique selon l'une quelconque des revendications 1 à 6, le composant E comprenant, sur la base de la somme des pourcentages en poids des composants A à E, qui est de 100 % en poids, de 0,1 à 5,0 % en poids de pigments, préférablement de 0,2 à 4,5 % en poids, en particulier de 0,5 à 4,0 % en poids.

8. Composition de moulage thermoplastique selon la revendication 7, le composant E comprenant, sur la base de la somme des pourcentages en poids des composants A à E, qui est de 100 % en poids, de 1 à 5 % en poids de dioxyde de titane, préférablement de 0,2 à 4,5 % en poids, en particulier de 0,5 à 4,0 % en poids.

9. Composition de moulage thermoplastique selon l'une quelconque des revendications 1 à 8, le composant C et/ou le composant D étant utilisé(s) avec une modification de surface ou produit d'encollage, préférablement avec des modifications de surface à base de silanes ou de siloxanes, particulièrement préférablement de trialcoxysilanes fonctionnalisés par aminoalkyle, par éther glycidique, par alcényle, par acryloxyalkyle et/ou par méthacryloxyalkyle, ou autrement à base d'une combinaison correspondante.

10. Composition de moulage thermoplastique selon l'une quelconque des revendications 1 à 9, le composant A étant choisi parmi un polyamide 6, un polyamide 66 et des copolymères ou des mélanges correspondants.

11. Composition de moulage thermoplastique selon l'une quelconque des revendications 1 à 10, la composition de moulage étant exempte de composés phosphoreux organiques qui contiennent des structures de type 9,10-dihydro-9-oxa-10-phosphaphénanthrène-10-oxyde (DOPO) dans leur structure de squelette.

12. Procédé pour la production d'une composition de moulage thermoplastique selon l'une quelconque des revendications 1 à 11 via le mélange des composants A à E.

13. Utilisation de la composition de moulage thermoplastique selon l'une quelconque des revendications 1 à 11 pour la production de fibres, de films et de moulages.

14. Fibre, film ou moulage composé(e) d'une composition de moulage thermoplastique selon l'une quelconque des revendications 1 à 11.

15. Procédé pour la production de fibres, de films ou de moulages selon la revendication 14 via une extrusion, un moulage par injection ou un moulage par gonflage de la composition de moulage thermoplastique selon l'une quelconque des revendications 1 à 11.
